# EUROPÄISCHE PATENTSCHRIFT

(11) **EP 3 351 351 B1**
(45) Veröffentlichungstag und Bekanntmachung des Hinweises auf die Patenterteilung: **26.01.2022**
(21) Anmeldenummer: 17207272.0
(22) Anmeldetag: 14.12.2017
(51) Int. Cl.: B25J 9/00, B25J 19/02

(54) **VORRICHTUNG ZUM AUTOMATISIERTEN ENTNEHMEN VON IN EINEM BEHÄLTER ANGEORDNETEN WERKSTÜCKEN**
DEVICE FOR THE AUTOMATED REMOVAL OF WORKPIECES ARRANGED IN A CONTAINER
DISPOSITIF DE PRÉLÈVEMENT AUTOMATISÉE DE PIÈCES À USINER AGENCÉES DANS UN RÉCIPIENT

(30) Priorität: 20.01.2017 DE 102017000527
(43) Veröffentlichungstag der Anmeldung: 25.07.2018
(73) Patentinhaber: Liebherr-Verzahntechnik GmbH, 87437 Kempten (DE)
(72) Erfinder: Mattern, Thomas, 87669 Rieden (DE); Hänschke, David, 87452 Altusried (DE); Riedmiller, Bernhard, 87497 Wertach (DE)
(74) Vertreter: Behr, Wolfgang

(56) Entgegenhaltungen:
- EP-A1- 2 679 352
- DE-T5-112012 002 677
- JP-A- H09 239 682
- JP-A- 2010 120 141
- JP-A- 2011 000 685

## Beschreibung

Die vorliegende Erfindung betrifft eine Vorrichtung zum automatisierten Entnehmen von in einem Behälter angeordneten Werkstücken, welche eine erste Objekterkennungseinrichtung zum Erfassen der Werkstücke im Behälter, einen ersten Greifer zum Greifen und Entnehmen der Werkstücke aus dem Behälter, sowie eine Steuerung zur Auswertung der Daten der ersten Objekterkennungseinrichtung, zur Pfadplanung und zur Ansteuerung des ersten Greifers aufweist.

Solche Vorrichtungen sind unter dem Schlagwort "Griff in die Kiste" bekannt geworden, und dienen insbesondere zur Bestückung von Fertigungsanlagen mit Werkstücken, welche ungeordnet in einem Behälter angeliefert werden. Solche Vorrichtungen sind bspw. aus den Druckschriften DE102014008444A1, DE102014008108A1, DE102014008107A1, DE102013013114A1, DE102012013031A1, DE102012013030A1, DE102012013029A1, DE102012013023A1, DE102012013022A1 und DE102012012988A1 der gleichen Anmelderin bekannt.

Die Druckschrift JP 2011 685 A offenbart eine Vorrichtung gemäß dem Oberbegriff des Anspruchs 1.

Zum Abtransport der aus dem Behälter entnommenen Werkstücke wird üblicherweise eine Transporteinrichtung mit einer oder mehreren Endablagen eingesetzt, auf welchen die Werkstücke abgelegt werden, beispielsweise um diese zu einer Fertigungsanlage zu transportieren. Zum Ablegen der Werkstücke auf der Transporteinrichtung kann dabei ein Roboterarm eingesetzt werden. Dieser ist in den oben genannten Druckschriften entweder zwischen dem Behälter und der Transporteinrichtung oder zwischen einer Zwischenstation und der Transporteinrichtung angeordnet.

Aus den Druckschriften DE 11 2012 002 677 T5 und JP 2011 685 A sind jeweils Vorrichtungen zum automatisierten Entnehmen von in einem Behälter angeordneten Werkstücken bekannt, bei welchen vertikale Gelenkarmroboter hängend über einem Ablagebereich, auf welcher die Werkstücke abgelegt werden, angeordnet sind.

Aufgabe der vorliegenden Erfindung ist es, die bekannten Vorrichtungen zum automatisierten Entnehmen von in einem Behälter angeordneten Werkstücken weiter zu verbessern.

Diese Aufgabe wird durch eine Vorrichtung gemäß Anspruch 1 gelöst.

Die vorliegende Erfindung umfasst eine Vorrichtung zum automatisierten Entnehmen von in einem Behälter angeordneten Werkstücken, welche eine erste Objekterkennungseinrichtung zum Erfassen der Werkstücke im Behälter, einen ersten Greifer zum Greifen und Entnehmen der Werkstücke aus dem Behälter, und eine Steuerung zur Auswertung der Daten der ersten Objekterkennungseinrichtung, zur Pfadplanung und zur Ansteuerung des ersten Greifers aufweist. Weiterhin weist die Vorrichtung eine Transporteinrichtung auf, auf welcher die aus dem Behälter entnommenen Werkstücke abgelegt werden, sowie einen Roboterarm, welcher zum Ablegen der Werkstücke auf der Transporteinrichtung eingesetzt wird. Die erfindungsgemäße Vorrichtung ist dadurch gekennzeichnet, dass der Roboterarm auf einem Podest über der Transporteinrichtung angeordnet ist. Hierdurch ergibt sich eine besonders effektive Ausnutzung des zur Verfügung stehenden Bauraums. Weiterhin ermöglicht diese Anordnung zusätzliche Funktionalitäten.

In einer bevorzugten Ausgestaltung der vorliegenden Erfindung ist unter dem Podest eine Station zur Handhabung der Werkstücke vorgesehen. Insbesondere kann es sich hierbei um eine Station zur manuellen Handhabung der Werkstücke auf der Transporteinrichtung handeln. Durch die Anordnung des Roboterarms auf dem Podest über der Transporteinrichtung wird der Platz geschaffen, um eine solche Station in die erfindungsgemäße Vorrichtung zu integrieren. Die Station kann dabei insbesondere dazu genutzt werden, um die Position von nicht korrekt abgelegten Werkstücken manuell zu korrigieren, oder solche Werkstücke manuell auszusortieren.

Die Anordnung des Roboterarms auf dem Podest erleichtert zudem den Schutz einer Bedienperson, welche an der Station zur manuellen Handhabung der Werkstücke arbeitet, da die Station durch das Podest zumindest teilweise abgeschirmt wird.

Bevorzugt weist die erfindungsgemäße Vorrichtung eine Schutzumfassung auf. Die Schutzumfassung dient dazu, um den Arbeitsbereich der Vorrichtung nach außen hin abzugrenzen, um Verletzungen von Bedienpersonen durch die Vorrichtung zu vermeiden. Bevorzugt umgibt die Schutzumfassung die Vorrichtung auf allen Seiten.

In einer bevorzugten Ausgestaltung der vorliegenden Erfindung ist die Station zur Handhabung der Werkstücke während des laufenden Betriebs der Vorrichtung von außerhalb der Schutzumfassung aus zugänglich. Dies ermöglicht den Zugriff auf die auf der Transporteinrichtung abgelegten Werkstücke auch während des laufenden Betriebs, so dass beispielsweise eine manuelle Korrektur möglich ist, ohne dass die Vorrichtung gestoppt werden muss. In einer möglichen Ausgestaltung kann die Station zur Handhabung der Werkstücke dabei nach außen hin offen sein.

In einer möglichen Ausgestaltung kann die Station zur Handhabung der Werkstücke außerhalb des Arbeitsbereiches aller Greifer der Vorrichtung angeordnet sein. Insbesondere durch die Anordnung des Roboterarms, welcher zum Ablegen der Werkstücke auf der Transporteinrichtung eingesetzt wird, auf einen Podest über der Transporteinrichtung, unter welchem die Station angeordnet ist, wird die Station bereits durch das Podest und die Anordnung des Roboterarms auf dem Podest weitgehend von dem Arbeitsbereich des Roboterarms abgeschirmt. Alternativ oder zusätzlich kann die Station durch eine Schutzwand, welche Teil der Schutzumfassung bildet, von dem Arbeitsbereich der Greifer getrennt sein.

In einer bevorzugten Ausgestaltung der vorliegenden Erfindung weist die Transporteinrichtung einen Ablagebereich auf, in welchem der Roboterarm Werkstücke auf der Transporteinrichtung ablegt. Bevorzugt ist der Ablagebereich neben dem Podest angeordnet, wobei sich die Transporteinrichtung von dem Ablagebereich aus unter das Podest und bevorzugt von dort aus weiter aus der Vorrichtung heraus erstreckt. Weiter bevorzugt bildet der unter dem Podest angeordnete Bereich der Transporteinrichtung einen Handhabungsbereich. Bevorzugt durchlaufen die Werkstücke dabei nach dem Ablegen auf der Transporteinrichtung zunächst den Handhabungsbereich, bevor sie aus der Vorrichtung heraus geführt werden.

Alternativ oder zusätzlich kann die Transporteinrichtung einen Ablagebereich und einen Handhabungsbereich aufweisen, wobei sich der Handhabungsbereich unterhalb des Podestes befindet, und der Ablagebereich vor dem Podest, so dass der auf dem Podest angeordnete Roboterarm die Werkstücke ungehindert auf dem Ablagebereich der Transporteinrichtung ablegen kann. Im Handhabungsbereich kann dann auf die abgelegten Werkstücke zugegriffen werden.

Weiterhin kann die Transporteinrichtung unter dem Podest hindurch geführt sein. Ein auf einer Seite unter dem Podest hervorzuschauender Bereich der Transporteinrichtung bildet bevorzugt einen Ablagebereich, in welchem die Werkstücke durch den Roboterarm auf der Transporteinrichtung abgelegt werden. Bevorzugt ist die Transporteinrichtung auf der dem Ablagebereich gegenüberliegenden Seite aus der Vorrichtung heraus geführt, wobei die Werkstücke bevorzugt von dem Ablagebereich unter dem Podest hindurch nach außen transportiert werden. Unter dem Podest ist bevorzugt die erfindungsgemäße Station zur Handhabung der Werkstücke angeordnet.

Das Podest kann beispielsweise mehrere Stützen umfassen, welche neben und/oder auf beiden Seiten der Transporteinrichtung angeordnet sind und eine Plattform tragen, auf welcher der Roboterarm montiert ist. Die Station und/oder die Transporteinrichtung kann dabei in einer bevorzugten Ausgestaltung zwischen zwei Stützen hindurch zugänglich sein.

Am Ausgang der Vorrichtung können eine oder mehrere Bearbeitungsstationen, beispielsweise zur Laserkennzeichnung der Werkstücke, angeordnet sein, durch welche die Transporteinrichtung hindurch verläuft. Bevorzugt sind die Bearbeitungsstation bzw. Bearbeitungsstationen in Transportrichtung der Transporteinrichtung der Station zur Handhabung nachgeschaltet.

Das Transportband weist bevorzugt Endablagen auf, an welchen die Werkstücke auf dem Transportband abgelegt werden. Bei den Endablagen der Transporteinrichtung kann es sich in einer möglichen Ausgestaltung um an die Form der Werkstücke angepasste Nester handeln, in welchen die Werkstücke in einer durch die Nester definierten Position und/oder Ausrichtung abgelegt werden. Die Nester können dabei gegebenenfalls auch an Paletten angeordnet sein, welche auf der Transporteinrichtung transportiert werden. Alternativ kann das Transportband jedoch auch einfache Ablageflächen aufweisen. Beispielsweise können die Werkstücke durch den Roboterarm in durch die Ausgestaltung der Transporteinrichtung nicht näher definierten Positionen auf dieser abgelegt werden.

Die Transporteinrichtung umfasst bevorzugt eines oder mehrere Transportbänder.

In einer ersten Variante der vorliegenden Erfindung kann der erste Greifer an dem Roboterarm angeordnet sein, so dass der auf dem Podest angeordnete Roboterarm sowohl zum Greifen der Werkstücke aus dem Behälter, als auch zum Ablegen der Werkstücke auf der Transporteinrichtung eingesetzt wird.

In einer zweiten Variante ist dagegen ein zweiter Greifer vorgesehen, welcher an dem Roboterarm angeordnet ist, so dass der erste Greifer zum Greifen der Werkstücke aus dem Behälter, und der zweite Greifer zum Ablegen der Werkstücke auf der Transporteinrichtung eingesetzt wird. Bei der zweiten Variante ist der erste Greifer bevorzugt an einem weiteren Roboterarm und/oder an einem Flächenportal angeordnet.

In einer möglichen Ausgestaltung der vorliegenden Erfindung können die Werkstücke ausgehend von dem Behälter unmittelbar auf der Transporteinrichtung abgelegt werden. Dies ist insbesondere dann bevorzugt, wenn der erste Greifer sowohl zum Greifen der Werkstücke auf dem Behälter, als auch zum Ablegen der Werkstücke auf der Transporteinrichtung eingesetzt wird.

Die erfindungsgemäße Vorrichtung kann weiterhin eine Zwischenstation aufweisen, auf welcher der erste Greifer die Werkstücke nach dem Entnehmen aus dem Behälter ablegt, wobei der Roboterarm eingesetzt wird, um die Werkstücke ausgehend von der Zwischenstation auf der Transporteinrichtung abzulegen.

In einer ersten Variante kann der erste Greifer am Roboterarm angeordnet sein und sowohl zum Entnehmen der Werkstücke aus dem Behälter und Ablegen der Werkstücke auf der Zwischenstation, als auch zum erneuten Greifen der Werkstücke von der Zwischenstation und Ablegen auf der Transporteinrichtung eingesetzt werden.

Bevorzugt kommt beim Einsatz einer Zwischenstation jedoch eine zweite Variante zum Einsatz, bei welcher der erste Greifer die Werkstücke nach dem Entnehmen aus dem Behälter auf der Zwischenstation ablegt, und ein zweiter, am Roboterarm angeordneter Greifer die Werkstücke von der Zwischenstation aufnimmt und auf der Transporteinrichtung ablegt.

Ist der erste Greifer an einem weiteren Roboterarm angeordnet, so ist der Roboterarm des ersten Greifers bevorzugt unterhalb der durch das Podest angehobenen Ebene des Roboterarms zum Ablegen der Werkstücke auf der Transporteinrichtung angeordnet. Die Basis des Roboterarms des ersten Greifers kann dabei entweder unmittelbar auf dem Boden, oder auf einem Podest angeordnet werden, welches niedriger ist als das Podest des Roboterarms, welcher zum Ablegen der Werkstücke auf der Transporteinrichtung eingesetzt wird.

Der Roboterarm bzw. die Roboterarme weisen bevorzugt eine Basis und mehrere bewegliche Elemente auf, welche durch Dreh- oder Schwenkwerke miteinander in Verbindung stehen. Der Roboterarm ist dabei bevorzugt mit seiner Basis auf dem Podest montiert.

An der Basis ist bevorzugt eine vertikale Drehachse angeordnet, welche ein erstes drehbares Element des Roboterarms trägt. An diesem ist bevorzugt eine horizontale Schwenkachse angeordnet, welche ein erstes Armsegment trägt. An diesem sind wiederrum über Schwenk- und Drehachsen weitere Armsegmente angeordnet. Beispielsweise kann es sich bei den eingesetzten Roboterarmen um 6-Achs-Industrieroboter handeln.

In einer möglichen Ausgestaltung der vorliegenden Erfindung kann der Greifer über ein Greiferarmelement an dem Roboterarm angeordnet sein, wobei das Greiferarmelement weitere Bewegungsachsen aufweist. Beispielsweise kann das Greiferarmelement eine zusätzliche Schwenk- und/oder Drehachse aufweisen.

In einer bevorzugten Ausgestaltung der vorliegenden Erfindung sind sowohl der erste Greifer, als auch der zweite Greifer, soweit ein solcher vorhanden ist, als mechanische Greifer ausgestaltet.

In einer möglichen Ausgestaltung der vorliegenden Erfindung kann die Vorrichtung eine zweite Zwischenstation aufweisen. Bevorzugt wird der Roboterarm dazu eingesetzt, um die Werkstücke von der Zwischenstation aufzunehmen und wahlweise auf der zweiten Zwischenstation und der Transporteinrichtung abzulegen.

Bevorzugt ist eine zweite Objekterkennungseinrichtung vorgesehen, welche die Orientierung des Werkstückes auf der Zwischenstation bestimmt, wobei die Steuerung anhand der Daten der zweiten Objekterkennungseinrichtung entscheidet, ob ein Werkstück unmittelbar zur Transporteinrichtung oder zunächst zur zweiten Zwischenstation gelangt.

Bei der zweiten Zwischenstation kann es sich bevorzugt um einen Umgreifplatz handeln, welcher ein Greifen des Werkstücks mit geänderter Orientierung relativ zum Greifer erlaubt.

Wird eine Zwischenstation eingesetzt, auf welcher die aus dem Behälter gegriffenen Werkstücke abgelegt und wieder aufgenommen werden, so kann diese insbesondere wie im Folgenden beschrieben ausgestaltet sein:
Die Zwischenstation kann eine Transporteinrichtung umfassen, welche die Werkstücke von einem Ablagebereich in einen Entnahmebereich transportiert. Hierdurch können das Ablegen und das Wiederaufnehmen der Werkstücke von der Zwischenstation räumlich getrennt werden. In einer besonders bevorzugten Ausgestaltung handelt es sich bei der Transporteinrichtung um einen Drehtisch.

In einer weiteren bevorzugten Ausgestaltung kann die Zwischenstation mindestens eine kippbare Ablagefläche aufweisen, welche über einen Kippmechanismus in eine schräge Position kippbar ist. Insbesondere kann die kippbare Ablagefläche dabei von einer im Wesentlichen horizontalen Ausrichtung in eine schräge Position kippbar sein.

Bevorzugt ist die kippbare Ablagefläche so ausgestaltet, dass ein auf der kippbaren Ablagefläche abgelegtes Werkstück durch das Kippen von der kippbaren Ablagefläche rutscht. Die kippbare Ablagefläche kann hierdurch insbesondere zum Vereinzeln und/oder Ausschleusen von Werkstücken eingesetzt werden.

In einer möglichen Ausgestaltung kann die kippbare Ablagefläche so angeordnet sein, dass ein auf der kippbaren Ablagefläche abgelegtes Werkstück durch Kippen der kippbaren Ablagefläche auf die Transporteinrichtung rutscht. Bevorzugt weist die Zwischenstation einen Sensor auf, welcher erkennt, ob mehr als ein Werkstück gegriffen wurde, wobei die Steuerung den ersten Greifer dann, wenn mehr als ein gegriffenes Werkstück erfasst wurde, so ansteuert, dass die Werkstücke auf der kippbaren Ablagefläche abgelegt werden und durch Kippen der Ablagefläche auf die Transporteinrichtung rutschen. Wurde dagegen erkannt, dass nur ein Werkstück gegriffen wurde, so wird dieses bevorzugt unmittelbar auf der Transporteinrichtung abgelegt.

Alternativ oder zusätzlich kann die kippbare Ablagefläche an einer Transporteinrichtung angeordnet sein, wobei die Transporteinrichtung bevorzugt mehrere separat kippbare Ablageflächen aufweist. Insbesondere kann die kippbare Ablagefläche an einem Drehtisch angeordnet sein, wobei der Drehtisch bevorzugt mehrere separat kippbare Ablageflächen aufweist.

Weiterhin kann die Zwischenstation eine Ausschleusevorrichtung aufweisen, welche so angeordnet ist, dass ein auf einer kippbaren Ablagefläche abgelegtes Werkstück durch Kippen der Ablagefläche zur Ausschleusevorrichtung rutscht. Bevorzugt handelt es sich bei der Ausschleusevorrichtung um eine Schublade, wobei die Schublade bevorzugt von außerhalb einer Schutzumfassung der Vorrichtung aus bedient werden kann.

In einer weiteren Ausgestaltung kann die Zwischenstation eine Transporteinrichtung umfassen, welche die Werkstücke von einem Ablagebereich in einen Entnahmebereich transportiert, sowie eine zweite Objekterkennungseinrichtung zur Erfassung der Werkstücke auf der Transporteinrichtung, wobei die zweite Objekterkennungseinrichtung eine Lichtquelle zur Beleuchtung des Werkstücks aufweist. Hierdurch wird eine sicherere Erfassung der Werkstücke auf der Transporteinrichtung möglich.

Bevorzugt weist die zweite Objekterkennungseinrichtung eine Einhausung auf, welche das Einfallen von Streulicht von außen auf das Werkstück verringert, wobei sich die Einhausung bevorzugt von einem Sensor, welcher in einem ersten Abstand zu einer Ablagefläche der Transporteinrichtung angeordnet ist, zur Transporteinrichtung hin erstreckt. Dabei kann zwischen der Einhausung und einer Ablagefläche der Transporteinrichtung ein Zu- und ein Abfuhrbereich offen bleiben, welcher das Zu- und Abführen der Werkstücke auf der Ablagefläche der Transporteinrichtung in den Bereichen der Einhausung erlaubt. Bevorzugt endet die Einhausung im Zu- und Abfuhrbereich in einem zweiten Abstand zur Ablagefläche der Transporteinrichtung, wobei der zweite Abstand weniger als 50% des ersten Abstands beträgt, bevorzugt weniger als 20%.

In einer weiteren Ausgestaltung kann die Zwischenstation einen Drehtisch umfassen, welcher die Werkstücke von einen Ablagebereich in einen Entnahmebereich transportiert, und eine zweite Objekterkennungseinrichtung zum Erfassen der Werkstücke auf dem Drehtisch, wobei die zweite Objekterkennungseinrichtung so über den Drehtisch angeordnet ist, dass ein Werkstück auf dem Weg von dem Ablagebereich in den Entnahmebereich in einen Erfassungsbereich gelangt, wo es durch die zweite Objekterkennungseinrichtung erfasst wird, bevor es durch Drehung des Drehtisches weiter zum Entnahmebereich bewegt wird.

In einer möglichen Ausgestaltung der vorliegenden Erfindung kann der Drehtisch getaktet arbeiten und mindestens drei Drehpositionen aufweisen, wobei eine Ablagefläche des Drehtisches in der ersten Drehposition des Drehtisches im Ablagebereich, in einer zweiten Drehposition im Erfassungsbereich und in der dritten Drehposition im Entnahmebereich angeordnet ist. Dabei kann das Ablegen eines Werkstücks auf dem Drehtisch durch den ersten Greifer, das Erfassen eines Werkstückes auf dem Drehtisch durch die zweite Objekterkennungseinrichtung und das Wiederaufnehmen eines Werkstückes von dem Drehtisch durch den Roboterarm jeweils bei stehendem Drehtisch erfolgen.

Alternativ oder zusätzlich kann der Drehtisch mindestens drei Ablageflächen aufweisen, wobei sich immer dann, wenn eine erste Ablagefläche im Ablagebereich angeordnet ist, eine zweite Ablagefläche im Erfassungsbereich und eine dritte Ablagefläche im Entnahmebereich befindet. Bevorzugt erfolgt jeweils gleichzeitig ein Ablegen eines ersten Werkstücks auf dem Drehtisch durch den ersten Greifer, ein Erfassen eines zweiten Werkstücks auf dem Drehtisch durch die zweite Objekterkennungseinrichtung und ein Wiederaufnehmen eines dritten Werkstückes von dem Drehtisch durch den Roboterarm.

Die oben beschriebene Einhausung der zweiten Objekterkennungseinrichtung ist bevorzugt im Erfassungsbereich angeordnet, wobei die Ablageflächen des Drehtisches durch Drehung des Drehtisches jeweils unter die Einhausung gefahren werden können.

Alternativ oder zusätzlich kann die kippbare Ablagefläche bevorzugt unter der Einhausung angeordnet und/oder anordenbar sein. Hierdurch kann dann, wenn durch die zweite Objekterkennungseinrichtung ein fehlerhaftes und/oder eine falsche Anzahl und/oder verhakte Teile erfasst werden, durch Kippen der Ablagefläche unmittelbar eine Ausschleusung erfolgen.

Weiterhin bevorzugt befindet sich die kippbare Ablagefläche mit ihrer ganzen Grundfläche unterhalb der Einhausung, wobei die Seitenwände der Einhausung bevorzugt ein Kippen der Ablagefläche innerhalb der Einhausung ermöglichen.

Bevorzugt ist die Ausschleuse-Vorrichtung so angeordnet, dass durch Kippen einer im Erfassungsbereich angeordneten kippbaren Ablagefläche die auf dieser Ablagefläche angeordneten Werkstücke in die Ausschleuse-Vorrichtung rutschen. Hierdurch kann dann, wenn durch die zweite Objekterkennungseinrichtung ein fehlerhaftes und/oder eine falsche Anzahl und/oder verhakte Teile erfasst werden, durch Kippen der Ablagefläche unmittelbar eine Ausschleusung erfolgen.

Bei der ersten Objekterkennungseinrichtung kann es sich erfindungsgemäß um einen 3D-Sensor handeln. Ist eine zweite Objekterkennungseinrichtung vorgesehen, so umfasst diese bevorzugt einem 2D-Sensor. Insbesondere kann bei der zweiten Objekterkennungseinrichtung in einer möglichen Ausgestaltung auf einen 3D-Sensor verzichtet werden.

In einer möglichen Ausgestaltung der vorliegenden Erfindung sind im Arbeitsbereich des ersten Greifers mehrere Behälter mit Werkstücken anordenbar, aus welchen der erste Greifer Werkstücke greifen kann. Bevorzugt umfasst die Vorrichtung hierfür eine Zuführanordnung mit mindestens zwei nebeneinander angeordneten Zuführbereichen für Behälter.

Bevorzugt ist die erste Objekterkennungseinrichtung mittels einer Verfahranordnung über jeden der Behälter und/oder Zufuhrbereiche fahrbar.

Alternativ oder zusätzlich kann eine Trennvorrichtung vorgesehen sein, über welche die Zuführbereiche einzeln von dem Arbeitsbereich des Greifers trennbar sind. Insbesondere kann eine Haube vorgesehen sein, welche über einen der Behälter und/oder einen der Zuführbereiche gefahren werden kann.

Die erfindungsgemäße Vorrichtung kann so ausgestaltet sein, dass mehrere unterschiedliche Werkstücke nebeneinander gehandhabt werden können.

Alternativ oder zusätzlich kann die Transporteinrichtung mehrere parallele Transportstrecken aufweisen. Bevorzugt werden auf den unterschiedlichen Transportstrecken der Transporteinrichtung unterschiedliche Werkstücke abgelegt.

Die vorliegende Erfindung wird nun anhand von Ausführungsbeispielen und Zeichnungen näher dargestellt.

Dabei zeigen:
- Fig. 1:: ein Ausführungsbeispiel einer erfindungsgemäßen Vorrichtung in einer Draufsicht,
- Fig. 2:: das Ausführungsbeispiel aus Fig. 1 in einer perspektivischen Ansicht von schräg oben,
- Fig. 3:: das Ausführungsbeispiel aus Fig. 1 in einer Seitenansicht, bei welcher die Schutzumfassung teilweise entfernt wurde,
- Fig. 4:: das bei dem Ausführungsbeispiel aus Fig. 1 eingesetzte Ausführungsbeispiel einer Zwischenstation,
- Fig. 5:: ein Ausführungsbeispiel einer kippbaren Ablagefläche, wie sie bei dem Ausführungsbeispiel einer Zwischenstation gemäß Fig. 4 zum Einsatz kommt,
- Fig. 6:: ein Ausführungsbeispiel eines Drehtisches, wie er bei dem in Fig. 4 gezeigten Ausführungsbeispiel einer Zwischenstation zum Einsatz kommt,
- Fig. 7:: ein Ausführungsbeispiel einer erfindungsgemäßen Ausschleusestation, wie sie bei dem in Fig. 4 gezeigten Ausführungsbeispiel einer Zwischenstation zum Einsatz kommt,
- Fig. 8a:: eine perspektivische Ansicht einer zweiten Zwischenstation und
- Fig. 8b:: eine Seitenansicht einer zweiten Zwischenstation.

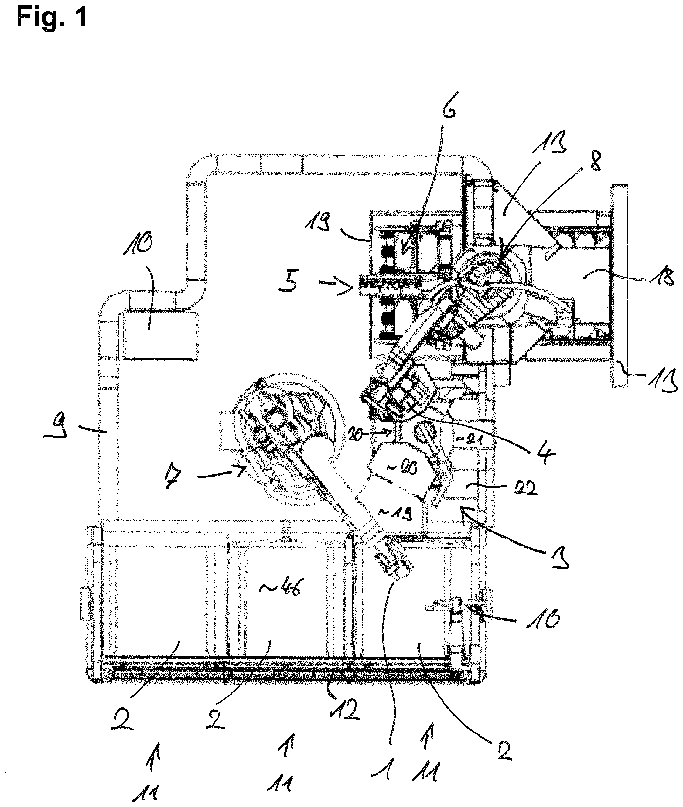

Fig. 1 bis 8 zeigen ein Ausführungsbeispiel einer erfindungsgemäßen Vorrichtung, bei welcher sämtliche Aspekte der vorliegenden Erfindung in Kombination verwirklicht sind. Die im Ausführungsbeispiel gezeigte Umsetzung der einzelnen Aspekte kann jedoch auch jeweils unabhängig von der gezeigten Kombination eingesetzt werden, und bildet daher auch jeweils für sich genommen einen selbstständigen Aspekt der vorliegenden Erfindung.

Das in Fig. 1 bis 3 gezeigte Ausführungsbeispiel der erfindungsgemäßen Vorrichtung weist einen ersten Greifer 1 auf, welcher zum Greifen von Werkstücken aus den Behältern 2 eingesetzt wird. In den Behältern 2 können Werkstücke geordnet oder ungeordnet zur Verfügung gestellt werden.

Weiterhin ist eine Objekterkennungseinrichtung 10 vorgesehen, welche die in den Behältern 2 vorhandenen Werkstücke erfasst. Die Vorrichtung weist eine Steuerung auf, welche die Daten der Objekterkennungseinrichtung 10 auswertet, eine Pfadplanung zur Ansteuerung des Greifers vornimmt, und den Greifer anhand dieser Pfadplanung ansteuert, um die Werkstücke aus dem Behälter 2 zu entnehmen. Die Steuerung ist im Ausführungsbeispiel in einem Schaltschrank 10 angeordnet.

Bei dem in Fig. 1 bis 3 gezeigten Ausführungsbeispiel ist der erste Greifer 1 an einem Roboterarm 7 angeordnet, und wird durch diesen bewegt. Bei dem Roboterarm kann es sich insbesondere um einen 6-Achs-lndustrieroboter handeln. Alternativ könnte der erste Greifer auch an einem Flächen- oder Linearportal angeordnet und über dieses bewegt werden. Bevorzugt ist der erste Greifer 1 über ein Greifarmelement an dem ersten Roboterarm 7 oder dem Flächen- oder Linearportal angeordnet, welches eine oder mehrere weitere Bewegungsachsen aufweist, um eine komplette Entleerung des Behälters sicher zu stellen. Insbesondere kann das Greifarmelement eine Schwenkachse und eine Drehachse aufweisen. Das Greifarmelement bzw. die Anordnung und Ausgestaltung des ersten Greifers 1 kann insbesondere so erfolgen, wie dies aus der DE102013013114 A1 bekannt ist. Bei dem ersten Greifer handelt es sich im Ausführungsbeispiel um einen mechanischen Greifer.

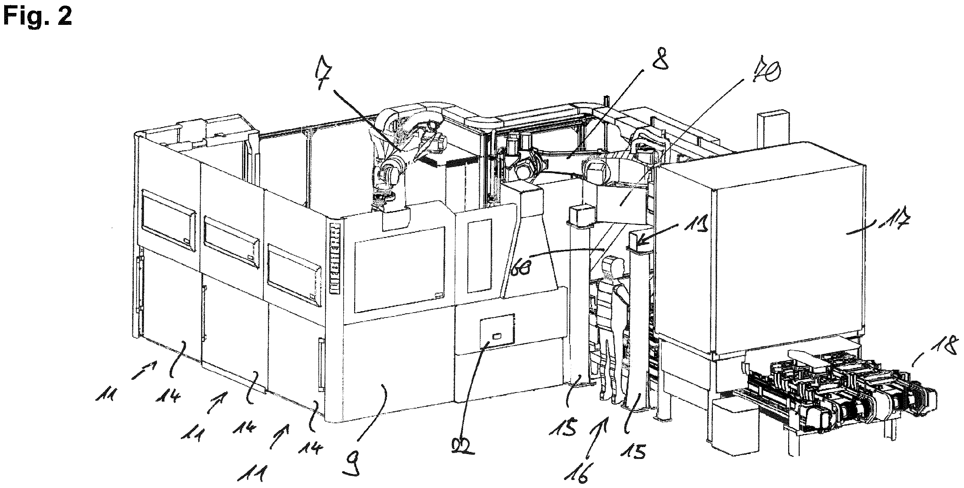

Bei dem in den Figuren dargestellten Ausführungsbeispielen können mehrere Behälter 2 im Arbeitsbereich des ersten Greifers 1 angeordnet werden. Hierfür ist eine Zuführanordnung mit drei Zuführbereichen 11 vorgesehen, in welche jeweils ein Behälter eingeführt werden kann. Wie in Fig. 2 erkennbar weist die Schutzumfassung 9 der Vorrichtung hierfür jeweils Türen 14 auf, über welche die Behälter in die Zuführbereiche eingeführt und aus diesen entnommen werden können. Weiterhin ist eine Trennanordnung in Form einer verschiebbaren Haube 46 vorgesehen, welche wahlweise über einem der drei Zuführbereiche angeordnet werden kann. Die Trennanordnung trennt den jeweiligen Zuführbereich vom Arbeitsbereich des Greifers 1, so dass ein im abgetrennten Zuführbereich angeordneter Behälter 2 ausgetauscht werden kann, ohne den Betrieb der Vorrichtung zu stoppen. Durch die Verwendung von drei Zuführbereichen sind jeweils zwei Zuführbereiche zum Arbeitsbereich des Greifers hin offen. Dies ermöglicht es, beispielsweise zwei Behälter mit unterschiedlichen Werkstücken parallel zu entleeren.

Die Objekterfassungseinheit 10 weist im Ausführungsbeispiel einen Sensor auf, welcher an einer Verfahranordnung 12 verfahrbar ist und hierdurch über jedem der Behälter bzw. Zuführbereiche angeordnet werden kann. Hierdurch ist nur eine erste Objekterkennungseinheit 10 notwendig, um Werkstücke in jedem der Behälter zu erfassen.

Bei den Behältern kann es sich beispielsweise um Metallboxen oder Gitterboxen handeln. Die im Ausführungsbeispiel gezeigte Vorrichtung kann mit drei Behältern eingesetzt werden, welche jeweils identische Werkstücke umfassen, oder mit zwei oder drei Behältern mit unterschiedlichen Werkstücken.

Die Objekterfassung der Werkstücke im Behälter durch die erste Objekterkennungseinrichtung 10, die Pfadplanung sowie des Ansteuerung des ersten Greifers sowie die Ausgestaltung der ersten Objekterkennungseinrichtung kann so erfolgen, wie dies aus der DE 102012012988 A1 bekannt ist. Die Ausgestaltung und der Betrieb der Zuführeinheit kann so erfolgen, wie dies aus der DE 102014008108 A1 bekannt ist.

Die Vorrichtung kann auch nur einen oder zwei Zuführbereiche aufweisen und/oder nur einen Behälter, welcher im Arbeitsbereich des ersten Greifers angeordnet ist.

Die in Fig. 1 bis 3 gezeigte Vorrichtung weist eine erste Zwischenstation 3 auf, auf welcher die durch den ersten Greifer 1 aus einem der Behälter 2 entnommenen Werkstücke abgelegt werden, um vereinzelt zu werden und/oder von dort aus mit höherer Präzision noch einmal gegriffen zu werden. Dabei ist eine Positioniervorrichtung in Form eines zweiten Greifers 4 vorgesehen, welcher die Werkstücke von der Zwischenstation aufnimmt. Der zweite Greifer 4 ist im Ausführungsbeispiel an einem zweiten Roboterarm 8 angeordnet. In alternativen Ausgestaltungen könnte der zweite Greifer 4 auch an einem Flächen- oder Linearportal angeordnet sein. Bei dem zweiten Greifer handelt es sich im Ausführungsbeispiel um einen mechanischen Greifer. Weiterhin alternativ könnte der gleiche Greifer sowohl zum Ablegen der Werkstücke auf der Zwischenstation, als auch zum Wiederaufnehmen der Werkstücke von der Zwischenstation eingesetzt werden.

Die Zwischenstation 3 weist im Ausführungsbeispiel einen Ablagebereich auf, in welchem die Werkstücke durch den ersten Greifer 1 abgelegt werden, sowie einen hiervon räumlich getrennten Entnahmebereich, in welchem die Werkstücke durch den zweiten Greifer 4 entnommen werden. Dabei ist eine Transporteinrichtung vorgesehen, welche die Werkstücke auf der Zwischenstation vom Ablagebereich zum Entnahmebereich transportiert. Weiterhin ist eine zweite Objekterkennungseinrichtung 21 vorgesehen, welche die Werkstücke auf der Transporteinrichtung erfasst. Im Ausführungsbeispiel weist die Zwischenstation hierfür einen räumlich vom Ablagebereich und vom Entnahmebereich getrennten Erfassungsbereich auf.

Das Wiederaufnehmen der Werkstücke von der Zwischenstation erfolgt durch einen zweiten Greifer 4, welcher an einen zweiten Roboterarm 8 angeordnet ist. Dieser wird dafür eingesetzt, um die Werkstücke auf einer Transporteinrichtung 6 abzulegen. Die Transporteinrichtung 6 umfasst im Ausführungsbeispiel ein Transportband, auf welchem als Endablagen für die Werkstücke Nester angeordnet sind, in welche die Werkstücke eingelegt werden. Hier wären jedoch auch beliebige andere Transporteinrichtungen denkbar.

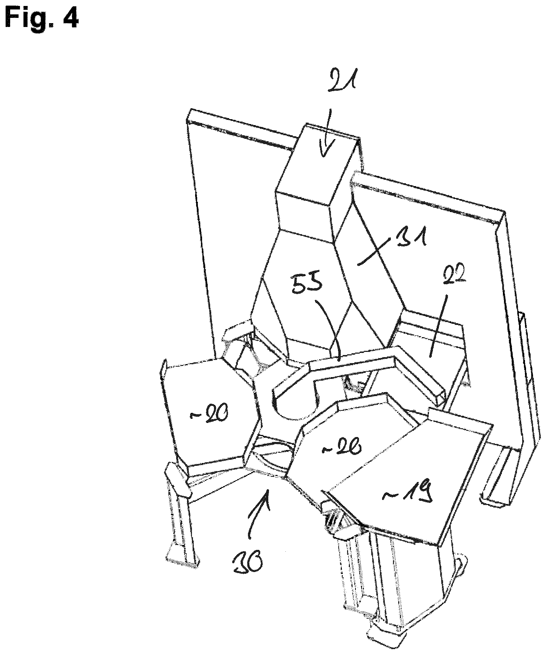

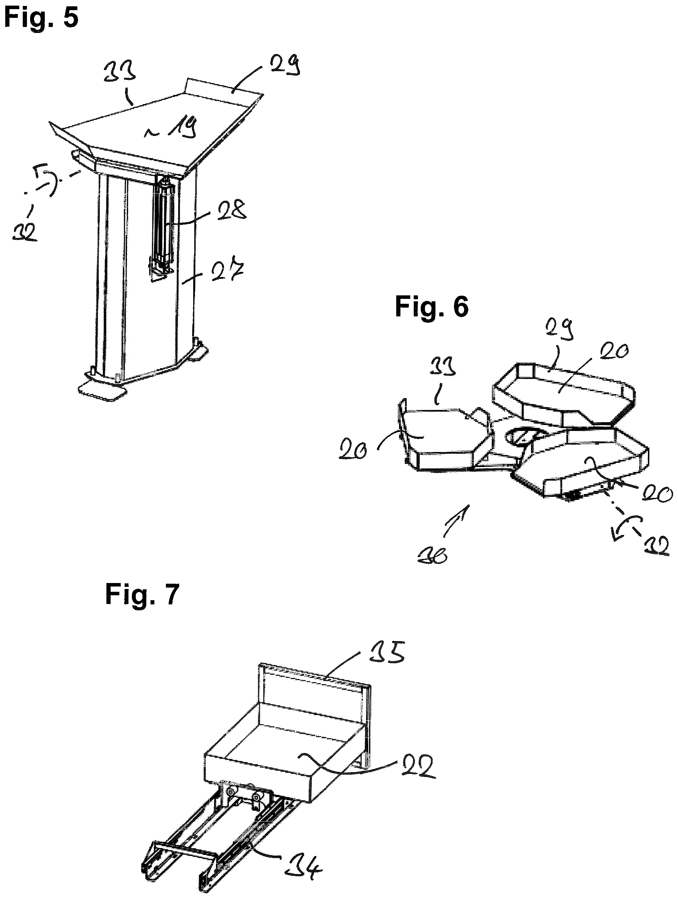

In Fig. 4 ist ein Ausführungsbeispiel der erfindungsgemäßen Zwischenstation dargestellt, in Fig. 5, 6 und 7 Komponenten dieser Zwischenstation. Die Zwischenstation verwirklicht dabei mehrere Aspekte der vorliegenden Erfindung in Kombination.

Gemäß einem Aspekt weist die Zwischenstation als Transporteinrichtung einen Drehtisch 30 mit mehreren Ablageflächen 20 auf. Durch Drehen des Drehtisches werden die Ablageflächen jeweils vom Ablagebereich über den Erfassungsbereich zum Entnahmebereich verfahren. Ein im Ablagebereich auf einer Ablagefläche abgelegtes Werkstück wird daher zunächst zur zweiten Objekterkennungseinrichtung 21 verfahren, dort erfasst, und nach einer weiteren Drehung des Drehtisches im Entnahmebereich von dem zweiten Greifer 4 entnommen.

Befindet sich eine erste Ablagefläche des Drehtisches im Ablagebereich, befindet sich gleichzeitig eine zweite Ablagefläche im Erfassungsbereich und eine dritte Ablagefläche im Entnahmebereich. Die Vorrichtung arbeitet dabei getaktet, so dass bei jeweils stehendem Drehtisch gleichzeitig ein erstes Werkstück im Ablagebereich abgelegt, ein zweites Werkstück im Erfassungsbereich erfasst und ein drittes Werkstück im Entnahmebereich entnommen wird. Sodann wird der Drehtisch gedreht, so dass die jeweiligen Werkstücke in den jeweils nächsten Bereich gelangen, woraufhin erneut entsprechende Arbeitsschritte in allen drei Bereich gleichzeitig vorgenommen werden.

Im Ausführungsbeispiel sind drei Ablageflächen 20 vorgesehen, welche mit einem Winkelabstand von 120 Grad am Drehtisch 30 angeordnet sind. Der Drehtisch wird nach jedem Arbeitstakt um 120 Grad gedreht.

In alternativen Ausgestaltungen der vorliegenden Erfindung könnte der Drehtisch auch eine größere Anzahl an Ablageflächen oder Drehpositionen aufweisen. Weiterhin alternativ müssen die Ablageflächen auch nicht physisch getrennt voneinander sein, sondern könnten beispielsweise als ringförmige Ablagefläche ausgestaltet sein.

Gemäß einem weiteren Aspekt der vorliegenden Erfindung weist die zweite Objekterkennungseinrichtung 21 eine Einhausung 31 auf, welche von einem im oberen Bereich der Einhausung angeordneten Sensor zur Transporteinrichtung hinunter reicht. Weiterhin weist die zweite Objekterkennungseinrichtung eine Lichtquelle zur Beleuchtung der Werkstücke auf. Durch die Einhausung 31 und die eigene Lichtquelle wird eine gleichbleibende, vom Umgebungslicht unabhängige Beleuchtung der Werkstücke im Erfassungsbereich möglich. Als Sensor wird dabei bevorzugt ein 2D-Sensor, beispielsweise ein Kamerasensor, eingesetzt.

Die Einhausung 31 ist im Ausführungsbeispiel als ein nur zur Transporteinrichtung hin offenes Gehäuse ausgeführt. Jede der Ablageflächen 20 kann durch Drehung des Drehtisches unter die Einhausung 31 gefahren werden. Bevorzugt befindet sich die gesamte Grundfläche einer Ablagefläche 20, wurde diese in den Erfassungsbereich gedreht, unterhalb der Einhausung 31.

Die Kanten der Einhausung 31 reichen zumindest in einem Zu- und einem Abfuhrbereich nicht komplett bis auf die Ebene der Ablageflächen 20, um das Zuführen von auf den Ablageflächen 20 angeordneten Werkstücken zu ermöglichen. Weisen die Ablageflächen 20, wie im Ausführungsbeispiel dargestellt, jedoch nach oben auskragende Randbereiche 29 auf, können diese im Wesentlichen bis zur Unterkante der Einhausung 31 reichen. Der Sensor ist innerhalb der Einhausung dagegen erheblich weiter von der Ablagefläche 20 entfernt als die Unterkanten der Einhausung. Insbesondere kann der Abstand zwischen dem Sensor und der Ablagefläche mindestens doppelt so groß und bevorzugt mindestens 5 mal so groß sein wie der Abstand zwischen der Unterkante der Einhausung im Bereich des Zu- und Abführbereiches und der Ablagefläche 20.

Gemäß einem weiteren Aspekt der vorliegenden Erfindung weist die Zwischenstation kippbare Ablageflächen auf.

Im Ausführungsbeispiel sind die Ablageflächen 20 des Drehtisches als kippbare Ablageflächen ausgestaltet. Ein Kippen der Ablageflächen 20 kann dazu eingesetzt werden, um Werkstücke auszuschleusen.

Das Ausschleusen kann dadurch erfolgen, dass eine sich im Erfassungsbereich befindliche Ablagefläche 20 des Drehtisches gekippt wird. Bevorzugt ist die Einhausung 31 dabei so ausgestaltet, dass sie ein Kippen der Ablagefläche 20 in ihrem Inneren erlaubt. Bevorzugt ist die Unterkante der Einhausung 31 hierfür außerhalb einer Grundfläche der im Erfassungsbereich befindlichen Ablagefläche 20 angeordnet, so dass diese in die Einhausung hinein kippen kann.

Ausgehend von der Ablagefläche 20 rutschen die Werkstücke in eine Ausschleuse-Vorrichtung 21, durch welche die Werkstücke manuell aus der Vorrichtung entnommen werden können.

Im Ausführungsbeispiel ist weiterhin ein Tisch 27 vorgesehen, welcher eine kippbare Ablagefläche 19 aufweist. Dieser ist neben der Transporteinrichtung angeordnet. Im Ausführungsbeispiel befindet er sich zwischen dem Behälter und dem Drehtisch.

Die Steuerung ist so ausgestaltet, dass der erste Greifer ein gegriffenes Werkstück nur dann auf die kippbare Ablagefläche 19 legt, wenn eine falsche Anzahl von Werkstücken gegriffen wurde, insbesondere wenn mehr als ein Werkstück gegriffen wurde. Dies kann insbesondere dann geschehen, wenn sich ein anderes Werkstück mit dem gegriffenen Werkstück so verhakt hat, dass es durch den ersten Greifer mit angehoben wird. Dies kann beispielsweise durch eine Lichtschranke erfasst werden, welche erfasst, mit welchem Abstand des ersten Greifers zur Lichtschranke ein Werkstück die Lichtschranke durchbricht. Entspricht dieser Abstand nicht dem Abstand, welcher beim Greifen nur eines Werkstückes zu erwarten wäre, geht die Steuerung vom Greifen mehrerer Werkstücke aus, und legt diese auf die Ablagefläche 19. Wird nur ein Werkstück gegriffen, so wird dieses unmittelbar auf eine Ablagefläche 20 der Transporteinrichtung gelegt.

Werden Werkstücke auf der Ablagefläche 19 angelegt, wird diese durch Kippen in eine schräge Position verbracht und bildet so eine Rutsche, von welcher die Werkstücke auf eine Ablagefläche der Transporteinrichtung der Zwischenstation rutschen, im Ausführungsbeispiel auf eine Ablagefläche 20 des Drehtisches, welche sich im Ablagebereich befindet.

Durch ein darauffolgendes Bewegen der Transporteinrichtung, im Ausführungsbeispiel durch Drehen des Drehtisches, werden die auf die Ablagefläche gerutschten Werkstücke in den Erfassungsbereich gebracht, wo mittels der zweiten Objekterkennungseinheit erfasst wird, ob tatsächlich zu viele Werkstücke auf der Ablagefläche 20 des Drehtisches liegen. Bestätigt die zweite Objekterkennungseinrichtung 21, dass zu viele Werkstücke auf der Ablagefläche 20 liegen, werden diese mittels eines Kippens der Ablagefläche 20 ausgeschleust.

Die mechanische Ausführung des Tisches 27 ist in Fig. 5 näher dargestellt. Dieser weist ein Podest auf, auf welchem die Ablagefläche 19 um eine horizontale Drehachse 32 kippbar angeordnet ist. Zum Kippen wird ein zwischen dem Podest und der Ablagefläche 19 angeordneter Pneumatikzylinder 28 eingesetzt.

Die nähere Ausgestaltung der am Drehtisch 30 angeordneten kippbaren Ablageflächen 20 ist in Fig. 6 näher dargestellt. Diese sind jeweils über eine horizontale Drehachse 32 am Drehtisch 30 angeordnet, wobei das Kippen über nicht erkennbare Pneumatikzylinder erfolgt.

Als Antrieb zum Kippen könnten selbstverständlich auch andere Antriebe eingesetzt werden, insbesondere andere Linearantriebe.

Die kippbaren Ablageflächen 19 und 20 weisen jeweils eine ebene Ablagefläche und eine offene Kante 33 auf, welche sich im gekippten Zustand unten befindet und über welche die Werkstücke von der Ablagefläche rutschen. In den übrigen Randbereichen weisen die Ablageflächen dagegen nach oben auskragende Ränder 29 auf, welche verhindern, dass Werkstücke in diesen Bereichen versehentlich von den Ablageflächen rutschen.

Die Ausgestaltung der Ausschleuse-Vorrichtung ist in Fig. 7 näher dargestellt. Hierbei handelt es sich im Ausführungsbeispiel um eine Schublade 22, welche so unterhalb des Drehtisches angeordnet ist, dass die Werkstücke, welche sich auf einer kippbaren Ablagefläche 20, welche sich im Erfassungsbereich befindet, befinden, durch Kippen dieser Ablagefläche in die Schublade 22 hinein rutschen. Die Schublade 22 kann über Schienen 34 bewegt werden, und ist von außerhalb der Schutzumfassung 8 der Vorrichtung zugänglich.

Die Front 35 der Schublade 22 bildet hierfür einen Teil der Schutzumfassung 8 der Vorrichtung. Wie in Fig. 2 erkennbar, kann die Schublade 22 hierdurch von außerhalb der Schutzumfassung der Vorrichtung bedient werden, um ausgeschleuste Werkstücke manuell zu entfernen.

Die Zwischenstation weist die in Fig. 4 dargestellte Schutzanordnung 55 auf, welche den Bereich der Schublade von den Arbeitsbereich des ersten Greifers trennt und daher einen Entnehmen der Werkstücke aus der Schublade ohne Unterbrechung der Arbeit der Vorrichtung ermöglicht.

Gemäß einem weiteren Aspekt der vorliegenden Erfindung, welcher aus Fig. 1 bis 3 ersichtlich ist, ist der zweite Roboterarm 8, welcher zum Ablegen der Werkstücke auf der Transporteinrichtung 6 eingesetzt wird, auf einem Podest 13 angeordnet, unter welchem sich die Transporteinrichtung 6 hindurch erstreckt.

Die Transporteinrichtung weist einen Ablagebereich 19 auf, welcher sich aus dem Bereich des Podestes heraus neben das Podest erstreckt. Der Ablagebereich 19 der Transporteinrichtung 6 ist daher für den zweiten Greifer 4 bzw. den zweiten Roboterarm 8 gut zugänglich.

Wie insbesondere aus Fig. 2 erkennbar, ist unterhalb des Podestes 13 eine Handhabungsstation 16 vorgesehen, welche zur manuellen Handhabung der Werkstücke auf der Transporteinrichtung eingesetzt werden kann. Durch die Anordnung des zweiten Roboterarms 8 auf dem Podest 13 ergibt sich zum einen eine äußerst platzsparende Konstruktion. Zum anderen ist die Station 16 durch das Podest 13 von dem Arbeitsbereich des Roboterarms 8 bzw. des zweiten Greifers weitgehend getrennt.

Das Podest 13 weist im Ausführungsbeispielen mehrere Stützen 15 auf, welche wiederrum eine Plattform tragen, auf welcher der zweite Roboterarm 8 angeordnet ist. Zwischen zwei Stützen 15 ist die Transportstrecke 16, welche unterhalb des Podestes zwischen den Stützen hindurch verläuft, von außen her zugänglich. Der Ablagebereich 19 und die Station 16 sind unterhalb der Ebene des Podestes zusätzlich über eine Strebe 60 des Podestes voneinander getrennt, unter welcher die Transporteinrichtung 6 hindurch fährt.

Oberhalb der Station 60 befindet sich eine Schutzwand 70, welche den Arbeitsbereich des zweiten Roboterarms von der Station trennt.

Der zweite Roboterarm 8 weist eine Basis 23 auf, welche auf dem Podest 13 angeordnet ist. Auf der Basis 23 ist ein erstes Element 24 des Roboterarms über eine vertikale Drehachse drehbar angeordnet. Das erste Element 24 weist eine horizontale Schwenkachse auf, über welche ein erstes Armsegment 25 am ersten Element angeordnet ist. Der Roboterarm 8 kann dabei beispielsweise als ein normaler 6-Achs-Industrieroboter ausgeführt sein.

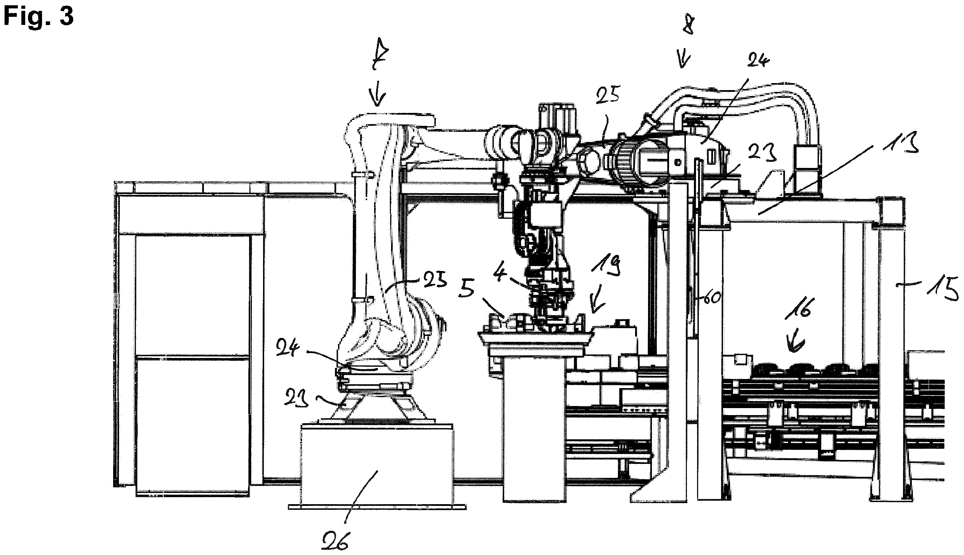

Wie in Fig. 3 erkennbar, kann auch der erste Roboterarm 7 einen Aufbau aufweisen, wie er soeben im Hinblick auf den zweiten Roboterarm beschrieben wurde. Im Ausführungsbeispiel steht die Basis 23 des ersten Roboterarms ebenfalls auf einen Podest 26, welches jedoch niedriger als das Podest 23 ist, auf welchem der zweite Roboterarm 8 angeordnet ist.

Im Ausführungsbeispiel ist die Basis 23 des zweiten Roboterarms 8 an dem dem Ablagebereich 19 zugewandten Ende des Podestes 13 angeordnet, und befindet sich daher oberhalb des Bereichs, welcher den Ablagebereich 19 von den Handhabungsbereich 16 der Station trennt.

Im Ablagebereich auf der Transporteinrichtung 6 abgelegte Werkstücke werden zunächst in den Handhabungsbereich bzw. im Bereich der Station 16 verfahren und von dort aus weiter in einen sich außerhalb der Vorrichtung befindlichen Bereich 18 der Transporteinrichtung.

Am Ausgang der Vorrichtung kann wie in Fig. 2 ersichtlich noch eine Bearbeitungsstation 17 angeordnet sein, welche beispielsweise zur Kennzeichnung der Werkstücke, beispielsweise über eine Lasermarkierung, eingesetzt werden kann.

Im Ausführungsbeispiel ist die Vorrichtung zum parallelen Handhaben von zwei unterschiedlichen Werkstücken ausgelegt. Hierfür weist die Transporteinrichtung 6 zwei separate, parallele Transportstrecken mit entsprechend unterschiedlichen Nestern auf.

Die Vorrichtung gemäß der vorliegenden Erfindung weist weiterhin eine zweite Zwischenstation 5 auf, welche als Umgreifstation ausgestaltet ist. Die Werkstücke müssen mit einer spezifischen Ausrichtung auf der Transporteinrichtung 6 abgelegt werden, was wiederrum eine spezifische Ausrichtung zwischen dem zweiten Greifer 4 und den Werkstücken erfordert. Eine solche Ausrichtung ist beim Aufnehmen der Werkstücke von der ersten Zwischenstation 3 nur dann möglich, wenn die Werkstücke bereits mit der richtigen Orientierung über eine Ablagefläche der ersten Zwischenstation angeordnet sind. Solche bereits richtig orientierten Werkstücke werden unmittelbar von der ersten Zwischenstation auf die Transporteinrichtung abgelegt.

Werkstücke, welche mit einer falschen Orientierung auf der ersten Zwischenstation angeordnet sind, werden dagegen zunächst durch den zweiten Greifer 4 auf der zweite Zwischenstation abgelegt, und dort noch einmal mit geänderter Orientierung zwischen Werkstück und Greifer gegriffen, um dann von der zweiten Zwischenstation auf der Transporteinrichtung 6 abgelegt zu werden.

Die Orientierung der Werkstücke auf der Zwischenstation wird über die zweite Objekterkennungseinrichtung 1 bestimmt, wobei die Steuerung den zweiten Greifer 4 auf Grundlage der Daten der zweiten Objekterkennungseinrichtung 21 entsprechend dem oben dargestellten Vorgehen ansteuert.

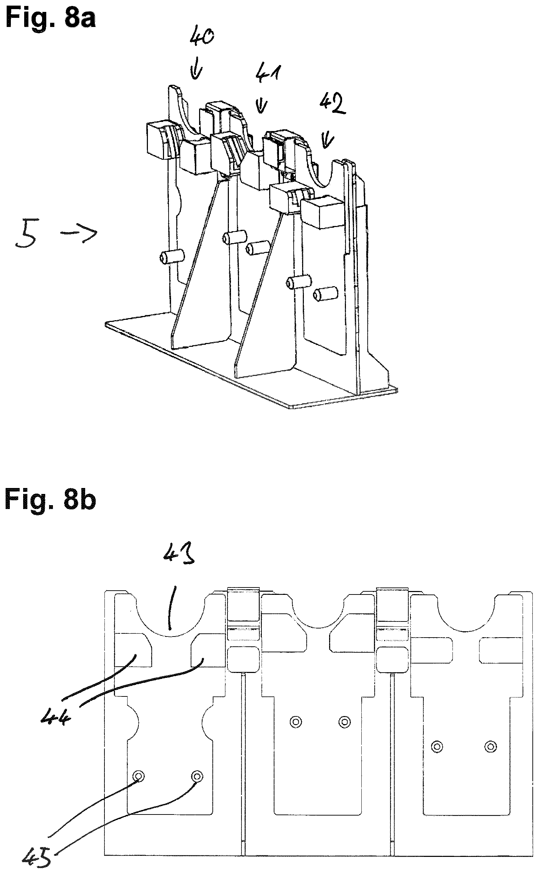

In Fig. 8a und 8b ist ein Ausführungsbeispiel für eine als zweite Zwischenstation einsetzbare Umgreifstation dargestellt, wobei hier drei separate Umgreifplätze 40, 41 und 42 für drei unterschiedliche Werkstücke vorhanden sind. Da es sich bei den hier zu handhabenden Werkstücken um Pleuel handelt, sind Blöcke 44 vorgesehen, auf welchen der Pleuelkopf zu liegen kommt, sowie Stifte 45, welche die Position der Pleuelstange begrenzen. Im oberen Bereich ist eine ringförmige Aussparung vorgesehen, so dass ein erneutes Greifen von der anderen Seite durch das Pleuelauge möglich ist. Bei anderen Ausgestaltungen des Werkstückes würden selbstverständlich anders ausgestaltet Umgreifplätze eingesetzt.

Im oben beschriebenen Ausführungsbeispiel wurde der zweite Greifer 4 bzw. der zweite Roboterarm 8 dazu eingesetzt, um Werkstücke von einer ersten Zwischenstation zu greifen. In alternativen Ausgestaltungen der vorliegenden Erfindung könnte der zweite Roboterarm 8 jedoch auch unmittelbar dazu eingesetzt werden, um Werkstücke aus einem Behälter zu greifen und auf der Transporteinrichtung 6 und/oder der zweiten Zwischenstation abzulegen. In diesem Fall könnte auf die erste Zwischenstation und/oder den ersten Greifer verzichtet werden. Bevorzugt ist der zweite Greifer dann über ein Greifarmelement mit einer oder mehreren zusätzlichen Bewegungsachsen an dem zweiten Greifarm 8 angeordnet, insbesondere über ein Greifarmelement, wie es oben im Hinblick auf den ersten Greifer beschrieben wurde.

## Patentansprüche

1. Vorrichtung zum automatisierten Entnehmen von in einem Behälter (2) angeordneten Werkstücken, mit
einer ersten Objekterkennungseinrichtung (10) zum Erfassen der Werkstücke im Behälter (2);
einem ersten Greifer (1) zum Greifen und Entnehmen der Werkstücke aus dem Behälter (2);
einer Steuerung zur Auswertung der Daten der ersten Objekterkennungseinrichtung (10), zur Pfadplanung und zur Ansteuerung des ersten Greifers (1);
einer Transporteinrichtung (6), auf welcher die aus dem Behälter (2) entnommenen Werkstücke abgelegt werden, und
ein Roboterarm (8), welcher zum Ablegen der Werkstücke auf der Transporteinrichtung (6) eingesetzt wird,
**dadurch gekennzeichnet, dass** der Roboterarm (8) auf einem Podest (13) über der Transporteinrichtung angeordnet ist.

2. Vorrichtung nach Anspruch 1, wobei unter dem Podest (13) eine Station (16) zur Handhabung der Werkstücke vorgesehen ist, wobei es sich bevorzugt um eine Station zur manuellen Handhabung der Werkstücke auf der Transporteinrichtung (6) handelt.

3. Vorrichtung nach Anspruch 1 oder 2, wobei die Vorrichtung eine Schutzumfassung (9) aufweist, wobei die Station (16) zur Handhabung der Werkstücke während des laufenden Betriebs der Vorrichtung von außerhalb der Schutzumfassung zugänglich ist, wobei die Station (16) zur Handhabung der Werkstücke bevorzugt nach außen hin offen ist.

4. Vorrichtung nach Anspruch 3, wobei sich die Station (16) zur Handhabung der Werkstücke außerhalb des Arbeitsbereiches aller Greifer (1, 4) der Vorrichtung befindet und/oder durch eine Schutzwand (70) von dem Arbeitsbereich der Greifer getrennt ist.

5. Vorrichtung nach einem der vorangegangenen Ansprüche, wobei die Transporteinrichtung (6) einen Ablagebereich (19) aufweist, welcher neben dem Podest (13) angeordnet ist, wobei sich die Transporteinrichtung (6) bevorzugt von dem Ablagebereich (19) unter das Podest (13) und von dort aus weiter aus der Vorrichtung heraus erstreckt, wobei der unter dem Podest angeordnete Bereich der Transporteinrichtung bevorzugt einen Handhabungsbereich (16) bildet.

6. Vorrichtung nach einem der vorangegangenen Ansprüche, wobei der erste Greifer (1) an dem Roboterarm (8) angeordnet ist, wobei der Roboterarm sowohl zum Greifen der Werkstücke aus dem Behälter (2), als auch zum Ablegen der Werkstücke auf der Transporteinrichtung (6) eingesetzt wird.

7. Vorrichtung nach einem der Ansprüche 1 bis 6, mit einem zweiten Greifer (4), welcher an dem Roboterarm (8) angeordnet ist, wobei der erste Greifer (1) zum Greifen der Werkstücke aus dem Behälter (2), und der zweite Greifer (4) zum Ablegen der Werkstücke auf der Transporteinrichtung (6) eingesetzt wird.

8. Vorrichtung nach Anspruch 7, wobei der erste Greifer (1) an einem weiteren Roboterarm (7) und/oder an einem Flächenportal angeordnet ist.

9. Vorrichtung nach einem der vorangegangenen Ansprüche, mit einer Zwischenstation (3), auf welcher der erste Greifer (1) die Werkstücke nach dem Entnehmen aus dem Behälter (2) ablegt, wobei der Roboterarm (8) eingesetzt wird, um die Werkstücke ausgehend von der Zwischenstation (3) auf die Transporteinrichtung (6) abzulegen.

10. Vorrichtung nach Anspruch 9, wobei der Roboterarm (8) dazu eingesetzt wird, um die Werkstücke von der Zwischenstation (3) aufzunehmen und wahlweise auf einer zweiten Zwischenstation (5) und der Transporteinrichtung (6) abzulegen, wobei bevorzugt eine zweite Objekterkennungseinrichtung (21) vorgesehen ist, welche die Orientierung des Werkstückes auf der Zwischenstation (3) bestimmt und wobei die Steuerung anhand der Daten der zweiten Objekterkennungseinrichtung (21) entscheidet, ob ein Werkstück unmittelbar zur Transporteinrichtung (6) oder zunächst zur zweiten Zwischenstation (5) gelangt, und/oder wobei es sich bei der zweiten Zwischenstation (5) bevorzugt um einen Umgreifplatz handelt, welcher ein Greifen des Werkstücks mit geänderter Orientierung relativ zum Greifer erlaubt.

11. Vorrichtung nach Anspruch 9 oder 10, wobei die Zwischenstation (3) eine Transporteinrichtung (30) umfasst, welche die Werkstücke von einem Ablagebereich in einen Entnahmebereich transportiert, wobei es sich bevorzugt um einen Drehtisch handelt, und/oder wobei die Zwischenstation (3) mindestens eine kippbare Ablagefläche (18, 20) aufweist, welche über einen Kippmechanismus in eine schräge Position kippbar ist, wobei die kippbare Ablagefläche (18, 20) bevorzugt so ausgestaltet ist, dass ein auf der kippbaren Ablagefläche (18, 20) abgelegtes Werkstück durch das Kippen von der kippbaren Ablagefläche rutscht.

12. Vorrichtung nach Anspruch 11,
wobei die kippbare Ablagefläche (18) so angeordnet ist, dass ein auf der kippbaren Ablagefläche (18) abgelegtes Werkstück durch Kippen der kippbaren Ablagefläche auf die Transporteinrichtung (30) rutscht, wobei die Zwischenstation (3) bevorzugt einen Sensor aufweist, welcher erkennt, ob mehr als ein Werkstück gegriffen wurde, wobei die Steuerung den ersten Greifer (1) dann, wenn mehr als ein gegriffenes Werkstück erfasst wurden, so ansteuert, dass die Werkstücke auf der kippbaren Ablagefläche (18) abgelegt werden und durch Kippen der Ablagefläche auf die Transporteinrichtung (30) rutschen,
und/oder wobei die kippbare Ablagefläche (20) an der Transporteinrichtung (30) angeordnet ist, wobei die Transporteinrichtung bevorzugt mehrere separat kippbare Ablageflächen (20) aufweist, wobei die kippbare Ablagefläche bevorzugt an einem Drehtisch angeordnet ist, wobei der Drehtisch bevorzugt mehrere separat kippbare Ablageflächen aufweist,
und/oder wobei die Zwischenstation (3) eine Ausschleuse-Vorrichtung (21) aufweist, welche so angeordnet ist, dass ein auf der kippbaren Ablagefläche (20) abgelegtes Werkstück durch Kippen der Ablagefläche (20) zur Ausschleuse-Vorrichtung (21) rutscht, wobei es sich bei der Ausschleuse-Vorrichtung (21) bevorzugt um eine Schublade handelt, wobei die Schublade bevorzugt von außerhalb einer Schutzumfassung (9) der Vorrichtung aus bedient werden kann.

13. Vorrichtung nach einem der vorangegangenen Ansprüche, mit einer Zwischenstation (3), auf welcher der erste Greifer (1) die Werkstücke nach dem Entnehmen aus dem Behälter (2) ablegt, wobei die Zwischenstation eine Transporteinrichtung (30) umfasst, welche die Werkstücke von einem Ablagebereich in einen Entnahmebereich transportiert, und mit einer zweiten Objekterkennungseinrichtung (21) zur Erfassung der Werkstücke auf der Transporteinrichtung (30), wobei die zweite Objekterkennungseinrichtung (21) eine Lichtquelle zur Beleuchtung des Werkstücks aufweist, wobei die zweite Objekterkennungseinrichtung (21) bevorzugt eine Einhausung (31) aufweist, welche das Einfallen von Streulicht von außen auf das Werkstück verringert, wobei sich die Einhausung (31) bevorzugt von einem Sensor, welcher in einem ersten Abstand zu einer Ablagefläche (20) der Transporteinrichtung (30) angeordnet ist, zur Transporteinrichtung hin erstreckt, wobei zwischen der Einhausung (31) und der Ablagefläche der Transporteinrichtung (30) ein Zu- und ein Abfuhrbereich offen bleibt, welcher das Zu- und Abführen der Werkstücke auf der Transporteinrichtung (30) in den Bereich der Einhausung (31) erlaubt, wobei die Einhausung im Zu- und ein Abfuhrbereich in einem zweiten Abstand zur Ablagefläche (20) der Transporteinrichtung endet, wobei der zweite Abstand weniger als 50% des ersten Abstands beträgt, bevorzugt weniger als 20%.

14. Vorrichtung nach einem der vorangegangenen Ansprüche, mit einer Zwischenstation (3), auf welcher der erste Greifer (1) die Werkstücke nach dem Entnehmen aus dem Behälter (2) ablegt, wobei die Zwischenstation (3) einen Drehtisch (30) umfasst, welcher die Werkstücke von einem Ablagebereich in einen Entnahmebereich transportiert, und einer zweiten Objekterkennungseinrichtung (21) zum Erfassen der Werkstücke auf dem Drehtisch, wobei die zweite Objekterkennungseinrichtung (21) so über dem Drehtisch (30) angeordnet ist, dass ein Werkstück auf dem Weg von dem Ablagebereich in den Entnahmebereich in einen Erfassungsbereich gelangt, wo es durch die zweite Objekterkennungseinrichtung (21) erfasst wird, bevor es durch Drehung des Drehtisches (30) weiter zum Entnahmebereich bewegt wird,
wobei der Drehtisch (30) bevorzugt getaktet arbeitet und mindestens drei Drehpositionen aufweist, wobei eine Ablagefläche (20) des Drehtisches in der ersten Drehposition des Drehtisches im Ablagebereich, in der zweiten Drehposition im Erfassungsbereich und in der dritten Drehposition im Entnahmebereich angeordnet ist, wobei das Ablegen eines Werkstückes auf den Drehtisch durch den ersten Greifer (1), das Erfassen eines Werkstückes auf dem Drehtisch durch die zweite Objekterkennungseinrichtung (21) und das Wiederaufnehmen eines Werkstückes von dem Drehtisch durch den Greifarm (8) jeweils bei stehendem Drehtisch erfolgen,
und/oder wobei der Drehtisch (30) mindestens drei Ablageflächen (20) aufweist, wobei sich immer dann, wenn eine erste Ablagefläche (20) im Ablagebereich angeordnet ist, eine zweite Ablagefläche (20) im Erfassungsbereich und eine dritte Ablagefläche (20) im Entnahmebereich befindet, wobei bevorzugt jeweils gleichzeitig ein Ablegen eines ersten Werkstückes auf den Drehtisch (30) durch den ersten Greifer (1), ein Erfassen eines zweiten Werkstückes auf dem Drehtisch (30) durch die zweite Objekterkennungseinrichtung (21) und ein Wiederaufnehmen eines dritten Werkstückes von dem Drehtisch (30) durch den Greifarm (8) erfolgen.

15. Vorrichtung nach einem der vorangegangenen Ansprüche, wobei die erste Objekterkennungseinrichtung (10) einen 3D-Sensor und die zweite Objekterkennungseinrichtung (21) einen 2D-Sensor umfasst,
und/oder wobei im Arbeitsbereich des ersten Greifers (1) mehrere Behälter (2) mit Werkstücken anordenbar sind, aus welchen der erste Greifer Werkstücke greifen kann, wobei bevorzugt eine Zuführanordnung mit mindestens zwei nebeneinander angeordneten Zuführbereichen (11) für Behälter (2) vorgesehen ist, wobei die erste Objekterkennungseinrichtung (10) bevorzugt mittels einer Verfahranordnung (12) über jeden der Behälter und/oder Zuführbereiche (11) fahrbar ist und/oder wobei bevorzugt eine Trennvorrichtung (46) vorgesehen ist, über welche die Zuführbereiche (11) einzeln von dem Arbeitsbereich des Greifers (1) trennbar sind, wobei insbesondere eine Haube vorgesehen ist, welche über einen der Behälter und/oder einen der Zuführbereiche gefahren werden kann, und/oder
wobei mehrere unterschiedliche Werkstücke nebeneinander gehandhabt werden können und/oder wobei die Transporteinrichtung (6) mehrere parallele Transportstrecken aufweist.

## Claims

1. An apparatus for the automated removal of workpieces arranged in a bin (2), comprising
a first object recognition device (10) for detecting the workpieces in the bin (2); a first picker (1) for picking and removing the workpieces from the bin (2);
a control for evaluating the data of the first object recognition device (10), for path planning and for controlling the first picker (1);
a transport device (6) on which the workpieces removed from the bin (2) can be placed,
and a robot arm (8 that is used for placing the workpieces on the transport device (6),
**characterized in that** a robot arm (8) is arranged on a pedestal (13) above the transport device.

2. An apparatus in accordance with claim 1, wherein a station (16) for handling the workpieces is provided beneath the pedestal (13), with it preferably being a station for a manual handling of the workpieces on the transport device (6).

3. An apparatus in accordance with claim 1 or claim 2, wherein the apparatus has a protective enclosure(9); wherein the station (16) for handling the workpieces is accessible from outside the protective enclosure during ongoing operation of the apparatus; and wherein the station (16) for handling the workpieces is preferably open to the outside.

4. An apparatus in accordance with claim 3, wherein the station (16) for handling the workpieces is located outside the working region of all the pickers (1, 4) of the apparatus and/or is separated from the working region of the pickers by a protective wall (70).

5. An apparatus in accordance with one of the preceding claims, wherein the transport device (6) has a placement region (19) that is arranged next to the pedestal (13); wherein the transport device (6) preferably extends from the placement region (19) beneath the pedestal (13) and from there further out of the apparatus; and wherein the region of the transport device arranged beneath the pedestal preferably forms a handling region (16).

6. An apparatus in accordance with one of the preceding claims, wherein the first picker (1) is arranged at the robot arm (8); and wherein the robot arm is used both for picking the workpieces from the bin (2) and for placing the workpieces on the transport device (6).

7. An apparatus in accordance with one of the claims 1 to 6, comprising a second picker (4) that is arranged at the robot arm (8), wherein the first picker (1) is used for picking the workpieces from the bin (2) and the second picker (4) is used for placing the workpieces on the transport device (6).

8. An apparatus in accordance with claim 7, wherein the first picker (1) is arranged at a further robot arm (8) and/or at a surface portal.

9. An apparatus in accordance with one of the preceding claims, comprising an intermediate station (3) on which the first picker (1) places the workpieces after the removal from the bin (2), wherein the robot arm (8) is used to place the workpieces on the transport device (6), starting from the buffering station.

10. An apparatus in accordance with claim 9, wherein the robot arm (8) is used to pick up the workpieces from the buffering station (3) and to selectively place them on a second buffering station (5) and on the transport device (6); wherein a second object recognition device (21) is preferably provided that determines the orientation of the workpiece on the buffering station (3); and wherein the control decides with reference to the data of the second object recognition device (21) whether a workpiece moves directly to the transport device (6) or first to the second buffering station (5) and/or wherein the second buffering station (5) is preferably a repicking position that permits a picking of the workpiece with a changed orientation relative to the picker.

11. An apparatus in accordance with claim 9 or claim 10, wherein the buffering station (3) comprises a transport device (30) that transports the workpieces from a placement region into a removal region, with it preferably being a turntable; and/or wherein the buffering station (3) has at least one tiltable placement area (18, 20) that is tiltable into a slanted position via a tilt mechanism, with the tiltable placement area (18, 20) preferably being configured such that a workpiece placed on the tiltable placement area (18, 20) slides from the tiltable placement area due to the tilting.

12. An apparatus in accordance with claim 11,
wherein the tiltable placement area (18) is arranged such that a workpiece placed on the tiltable placement area (18) slides onto the transport device (30) by tilting the tiltable placement area; wherein the buffering station (3) preferably has a sensor that recognizes whether more than one workpiece has been picked; and wherein the control controls the first picker (1) when more than one picked workpiece was detected such that the workpieces are placed on the tiltable placement area (18) and slide onto the transport device (30) by tilting the placement area;
and/or wherein the tiltable placement area (20) is arranged at the transport device (30); wherein the transport device preferably has a plurality of separately tiltable placement areas (20); wherein the tiltable placement area is preferably arranged at a turntable; and wherein the turntable preferably has a plurality of separately tiltable placement areas;
and/or wherein the buffering station (3) has an expulsion apparatus (21) that is arranged such that a workpiece placed on the tiltable placement area (20) slides to the expulsion apparatus (21) by tilting the placement area (20); wherein the expulsion apparatus is preferably a drawer; and wherein the drawer can preferably be operated from outside a protective enclosure (9) of the apparatus.

13. An apparatus in accordance with one of the preceding claims, having a buffering station (3) on which the first picker (1) places the workpieces after the removal from the bin (2), wherein the buffering station comprises a transport device (30) that transports the workpieces from a placement region into a removal region; and having a second object recognition device (21) for detecting the workpieces on the transport device (30), wherein the second object detection device (21) has a light source for illuminating the workpiece; wherein the second object recognition device (21) preferably has a casing (31) that reduces the incidence of scattered light onto the workpiece from outside; wherein the casing (31) preferably extends from a sensor that is arranged at a first spacing from a placement area (20) of the transport device (30) toward the transport device; wherein a supply and discharge region between the casing (31) and the placement area of the transport device (30) remains open that permits the supply and discharge of the workpieces on the transport device (30) into the region of the casing (6); wherein the casing ends in the supply and discharge region at a second spacing from the placement area (20) of the transport device; wherein the second spacing amounts to less than 50%, preferably less than 20%, of the first spacing.

14. An apparatus in accordance with one of the preceding claims, having a buffering station (3) on which the first picker (1) places the workpieces after the removal from the bin (2), wherein the buffering station (3) comprises a turntable (30) that transports the workpieces from a placement region into a removal region; and having a second object recognition device (21) for detecting the workpieces on the turntable; wherein the second object recognition device (21) is arranged above the turntable (30) such that a workpiece moves on the way from the placement region into the removal region into a detection region where it is detected by the second object recognition device (21) before it is moved further to the removal region by rotation of the turntable (30);
wherein the turntable (30) preferably works in a cycled manner and has at least three rotational positions; wherein a placement area (20) of the turntable is arranged in the placement region in the first rotational position of the turntable, in the detection region in the second rotational position, and in the removal region in the third rotational position; and wherein the placement of a workpiece on the turntable by the first picker (1), the detection of a workpiece on the turntable by the second object recognition device (21), and the picking back up again of a workpiece from the turntable by the picker arm (8) respectively take place with a stationary turntable;
and/or wherein the turntable (30) has at least three placement areas (20); wherein, whenever a first displacement area (20) is arranged in the placement region, a second placement area (20) is located in the detection region and a third placement area is located in the removal region; and wherein a placing of a first workpiece on the turntable (30) by the first picker (1), a detection of a second workpiece on the turntable (30) by the second object recognition device (21) and a picking back up again of a third workpiece from the turntable (30) by the picker arm (8) take place.

15. An apparatus in accordance with one of the preceding claims, wherein the first object recognition device (10) comprises a 3D sensor and the second object recognition device (21) comprises a 2D sensor;
and/or wherein a plurality of bins (2) with workpieces are arrangeable in the working region of the first picker (1) from which the first picker can pick workpieces, with a supply arrangement having at least two supply regions (11) arranged next to one another for bins (2) preferably being provided, with the first object recognition device (10) preferably being movable over each of the bins and/or supply regions (11) by means of a travel arrangement (12), and/or with a separation apparatus (46) preferably being provided via which the supply regions (11) can be individually separated from the working region of the picker (1), with a hood in particular being provided that can be moved over one of the bins and/or over one of the supply regions; and/or
wherein a plurality of different workpieces can be handled next to one another; and/or wherein the transport device (6) has a plurality of parallel transport paths.

## Revendications

1. Dispositif de prélèvement automatisé de pièces à usiner agencées dans un récipient (2), comprenant
un premier système de reconnaissance d'objets (10) pour détecter les pièces à usiner dans le récipient (2) ;
un premier préhenseur (1) pour saisir et prélever les pièces à usiner dans le récipient (2) ;
un organe de commande pour évaluer les données du premier système de reconnaissance d'objets (10), planifier le chemin du premier préhenseur (1) et le commander ;
un système de transport (6), sur lequel les pièces à usiner prélevées dans le récipient (2) sont déposées,
et un bras de robot (8), qui est utilisé pour déposer les pièces à usiner sur le système de transport (6),
**caractérisé en ce que** le bras de robot (8) est agencé sur une plateforme (13) au-dessus du système de transport.

2. Dispositif selon la revendication 1, dans lequel un poste (16) pour la manipulation des pièces à usiner est prévu sous la plateforme (13), le poste étant de préférence un poste pour la manipulation manuelle des pièces à usiner sur le système de transport (6).

3. Dispositif selon la revendication 1 ou 2, dans lequel le dispositif comporte une enceinte de protection (9), le poste (16) pour la manipulation des pièces à usiner étant accessible pendant le fonctionnement continu du dispositif depuis l'extérieur de l'enceinte de protection, le poste (16) pour la manipulation des pièces à usiner étant de préférence ouvert vers l'extérieur.

4. Dispositif selon la revendication 3, dans lequel le poste (16) pour la manipulation des pièces à usiner se trouve en dehors de la zone de travail de tous les préhenseurs (1, 4) du dispositif et/ou est séparé de la zone de travail des préhenseurs par un écran protecteur (70).

5. Dispositif selon l'une des revendications précédentes, dans lequel le système de transport (6) comporte une zone de dépôt (19), qui est agencée à côté de la plateforme (13), le système de transport (6) s'étendant de préférence depuis la zone de dépôt (19) sous la plateforme (13) et de là s'éloignant encore du dispositif, la zone agencée sous la plateforme du système de transport formant de préférence une zone de manipulation (16).

6. Dispositif selon l'une des revendications précédentes, dans lequel le premier préhenseur (1) est agencé sur le bras de robot (8), le bras de robot étant utilisé aussi bien pour saisir les pièces à usiner dans le récipient (2) que pour déposer les pièces à usiner sur le système de transport (6).

7. Dispositif selon l'une des revendications 1 à 6, comprenant un deuxième préhenseur (4), qui est agencé sur le bras de robot (8), le premier préhenseur (1) étant utilisé pour saisir les pièces à usiner dans le récipient (2) et le deuxième préhenseur (4) pour déposer les pièces à usiner sur le système de transport (6).

8. Dispositif selon la revendication 7, dans lequel le premier préhenseur (1) est agencé sur un autre bras de robot (7) et/ou sur un portique de surface.

9. Dispositif selon l'une des revendications précédentes, comprenant un poste intermédiaire (3), sur lequel le premier préhenseur (1) dépose les pièces à usiner après le prélèvement dans le récipient (2), le bras de robot (8) étant utilisé pour déposer les pièces à usiner depuis le poste intermédiaire (3) sur le système de transport (6).

10. Dispositif selon la revendication 9, dans lequel le bras de robot (8) est utilisé pour prélever les pièces à usiner depuis le poste intermédiaire (3) et les déposer sélectivement sur un deuxième poste intermédiaire (5) ou le système de transport (6), un deuxième système de reconnaissance d'objets (21) étant de préférence prévu, qui détermine l'orientation de la pièce à usiner sur le poste intermédiaire (3) et l'organe de commande décidant, à l'aide des données du deuxième système de reconnaissance d'objets (21), si une pièce à usiner parvient directement au système de transport (6) ou d'abord au deuxième poste intermédiaire (5), et/ou dans lequel le deuxième poste intermédiaire (5) est de préférence un emplacement de changement de préhension qui permet une saisie de la pièce à usiner avec une orientation modifiée par rapport au préhenseur.

11. Dispositif selon la revendication 9 ou 10, dans lequel le poste intermédiaire (3) comprend un système de transport (30), qui transporte les pièces à usiner d'une zone de dépôt à une zone de prélèvement, dans lequel il s'agit de préférence d'une table tournante, et/ou dans lequel le poste intermédiaire (3) comporte au moins une surface de dépôt (18, 20) pouvant basculer, qui peut être basculée dans une position oblique par le biais d'un mécanisme de basculement, la surface de dépôt (18, 20) pouvant basculer étant de préférence configurée de telle manière qu'une pièce à usiner déposée sur la surface de dépôt (18, 20) pouvant basculer glisse en raison du basculement de la surface de dépôt pouvant basculer.

12. Dispositif selon la revendication 11,
dans lequel la surface de dépôt (18) pouvant basculer est agencée de telle manière qu'une pièce à usiner déposée sur la surface de dépôt (18) pouvant basculer glisse sur le système de transport (30) en raison du basculement de la surface de dépôt pouvant basculer, le poste intermédiaire (3) comportant de préférence un capteur, qui reconnaît si plus d'une pièce à usiner a été saisie, l'organe de commande commandant le premier préhenseur (1), quand plus d'une pièce à usiner saisie a été détectée, de telle sorte que les pièces à usiner sont déposées sur la surface de dépôt (18) pouvant basculer et glissent sur le système de transport (30) en raison du basculement de la surface de dépôt,
et/ou dans lequel la surface de dépôt (20) pouvant basculer est agencée sur le système de transport (30), le système de transport comportant de préférence plusieurs surfaces de dépôt (20) pouvant basculer séparément, la surface de dépôt pouvant basculer étant de préférence agencée sur une table tournante, la table tournante comportant de préférence plusieurs surfaces de dépôt pouvant basculer séparément,
et/ou dans lequel la station intermédiaire (3) comporte un dispositif d'éjection (21), qui est agencé de telle manière qu'une pièce à usiner déposée sur la surface de dépôt (20) pouvant basculer glisse vers le dispositif d'éjection (21) en raison du basculement de la surface de dépôt (20), le dispositif d'éjection (21) étant de préférence un tiroir, le tiroir pouvant de préférence être commandé depuis l'extérieur d'une enceinte de protection (9) du dispositif.

13. Dispositif selon l'une des revendications précédentes, comprenant un poste intermédiaire (3), sur lequel le premier préhenseur (1) dépose les pièces à usiner après le prélèvement dans le récipient (2), le poste intermédiaire comprenant un système de transport (30), qui transporte les pièces à usiner d'une zone de dépôt à une zone de prélèvement, et comprenant un deuxième système de reconnaissance d'objets (21) pour détecter les pièces à usiner sur le système de transport (30), le deuxième système de reconnaissance d'objets (21) comportant une source de lumière pour l'éclairage de la pièce à usiner, le deuxième système de reconnaissance d'objets (21) comportant de préférence une enveloppe (31), qui diminue l'incidence de la lumière diffuse de l'extérieur sur la pièce à usiner, l'enveloppe (31) s'étendant de préférence depuis un capteur, qui est agencé à une première distance de la surface de dépôt (20) du système de transport (30), vers le système de transport, une zone d'alimentation et d'enlèvement restant ouverte entre l'enveloppe (31) et la surface de dépôt du système de transport (30), qui permet l'alimentation et l'enlèvement des pièces à usiner se trouvant sur le système de transport (30) dans la zone de l'enveloppe (31), l'enveloppe se terminant dans la zone d'alimentation et d'enlèvement à une deuxième distance de la surface de dépôt (20) du système de transport, la deuxième distance étant inférieure à 50 % de la première distance, de préférence inférieure à 20 %.

14. Dispositif selon l'une des revendications précédentes, comprenant un poste intermédiaire (3), sur lequel le premier préhenseur (1) dépose les pièces à usiner après le prélèvement dans le récipient (2), le poste intermédiaire (3) comprenant une table tournante (30), qui transporte les pièces à usiner d'une zone de dépôt à une zone de prélèvement, et un deuxième système de reconnaissance d'objets (21) pour détecter les pièces à usiner sur la table tournante, le deuxième système de reconnaissance d'objets (21) étant agencé au-dessus de la table tournante (30) de telle manière qu'une pièce à usiner, sur le trajet de la zone de dépôt à la zone de prélèvement, parvient dans une zone de détection, dans laquelle elle est détectée par le deuxième système de reconnaissance d'objets (21), avant d'être déplacée encore vers la zone de prélèvement par une rotation de la table tournante (30),
dans lequel la table tournante (30) fonctionne de préférence de manière cadencée et comporte au moins trois positions de rotation, une surface de dépôt (20) de la table tournante étant agencée, dans la première position de rotation de la table tournante, dans la zone de dépôt, dans la deuxième position de rotation, dans la zone de détection et, dans la troisième position de rotation, dans la zone de prélèvement, le dépôt d'une pièce à usiner sur la table tournante étant effectué par le premier préhenseur (1), la détection d'une pièce à usiner sur la table tournante étant effectuée par le deuxième système de reconnaissance d'objets (21) et le nouveau prélèvement d'une pièce à usiner depuis la table tournante étant effectué par le bras préhenseur (8) respectivement lorsque la table tournante est à l'arrêt,
et/ou dans lequel la table tournante (30) comporte au moins trois surfaces de dépôt (20), dans lequel systématiquement, quand une première surface de dépôt (20) est disposée dans la zone de dépôt, une deuxième zone de dépôt (20) se trouve dans la zone de détection et une troisième zone de dépôt (20) dans la zone de prélèvement, un dépôt d'une première pièce à usiner sur la table tournante (30) par le premier préhenseur (1) étant de préférence effectué respectivement en même temps qu'une détection d'une deuxième pièce à usiner sur la table tournante (30) par le deuxième système de reconnaissance d'objets (21) et qu'un nouveau prélèvement d'une troisième pièce à usiner depuis la table tournante (30) par le bras préhenseur (8).

15. Dispositif selon l'une des revendications précédentes, dans lequel le premier système de reconnaissance d'objets (10) comprend un capteur 3D et le deuxième système de reconnaissance d'objets (21) comprend un capteur 2D,
et/ou dans lequel plusieurs récipients (2) avec des pièces à usiner peuvent être agencés dans la zone de travail du premier préhenseur (1), dans lesquels le premier préhenseur peut saisir des pièces à usiner, un agencement d'alimentation avec au moins deux zones d'alimentation (11) agencées l'une à côté de l'autre pour des récipients (2) étant de préférence prévu, le premier système de reconnaissance d'objets (10) pouvant de préférence être déplacé au moyen d'un agencement de déplacement (12) au-dessus de chacun des récipients et/ou des zones d'alimentation (11) et/ou dans lequel un dispositif de séparation (46) est de préférence prévu, par le biais duquel les zones d'alimentation (11) peuvent être séparées individuellement de la zone de travail du préhenseur (1), un capot étant en particulier prévu, qui peut être déplacé au-dessus d'un des récipients et/ou d'une des zones d'alimentation et/ou
dans lequel plusieurs pièces à usiner différentes peuvent être manipulées les unes à côté des autres et/ou dans lequel le système de transport (6) comporte plusieurs voies de transport parallèles.
